(19) Europäisches Patentamt
European Patent Office
Office européen des brevets

(11) **EP 2 363 855 A2**

(12) **EUROPEAN PATENT APPLICATION**

(43) Date of publication:
**07.09.2011 Bulletin 2011/36**

(51) Int Cl.:
***G11B 7/09*** (2006.01)   ***G11B 7/135*** (2006.01)

(21) Application number: **11154631.3**

(22) Date of filing: **16.02.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **25.02.2010 KR 20100017020**

(71) Applicant: **Samsung Electronics Co., Ltd.
Gyeonggi-do 442-742 (KR)**

(72) Inventors:
• **Kim, Bong-gi
Gyeonggi-do (KR)**
• **Ahn, Young-man
Gyeonggi-do (KR)**
• **Morishita, Ichiro
Yokohama 230-0027 (JP)**

(74) Representative: **D'Halleweyn, Nele Veerle Trees
Gertrudis et al
Arnold & Siedsma
Sweelinckplein 1
2517 GK The Hague (NL)**

(54) **Optical beam forming apparatus**

(57)    An optical beam forming apparatus capable of forming a polarization of laser beam into an elliptic polarization includes a beam source (180) to emit a semiconductor laser beam, a wave plate (130) to receive the beam emitted from the beam source (180) and to form an elliptic polarization, and a lens (150) to focus the beam passed through the wave plate (130) to form a beam spot on a disc (160).

## FIG. 1

**Description**

Apparatuses and methods consistent with the present general inventive concept relate to an optical beam forming apparatus. The optical beam forming apparatus can be applied to, for example, an apparatus using a laser, such as an optical pickup apparatus to emit a laser beam onto an optical disc thus to record information or to receive the laser beam reflected from the disc thus to reproduce the information recoded in the disc, a 3D (three dimension) apparatus using a three dimensional phenomenon, a hologram apparatus, or a printer.

As video and audio media develop, discs capable of recording and storing a high definition of video information and a high quality of audio information are being conceived and used. These discs are recording media, which can record and/or reproduce information, such as voices, images, documents, and so on, by boring pits in a surface thereof to change a reflex ratio of a laser beam. Previously, an optical disc, such as a compact disc (CD) or a digital versatile disc (DVD), has been used, but as a recording capacity of such discs has reached an upmost limit in the recent, new discs, for example, a blue-ray disc (BD) recordable/rewritable, a high density memory, an advanced optical disk (AOD), or a china blue high definition (CBHD), which can record more than several tens of G bytes of mass information, have been developed and are used with increasing frequency.

Further, lately, the recording capacity of discs has been gradually increasing due to the needs for high definition video. Particularly, two-dimensional images are being replaced by three-dimensional images stored in discs. Also, consumers are asking for more detailed calligraphic styles, figures, images or the like.

The capacity of information recordable in these various discs is decided in reverse proportion to a size of a laser beam spot converged on the surface of the disc. Thus, the size S of the laser beam spot is decided as the following [formula 1] by a wavelength $\lambda$ of a used laser beam and a numeral aperture (NA) of an objective lens.

$$S \propto k^* \, \lambda/NA \quad \text{...... [Formula 1]}$$

Here, k, as a coefficient depends on a particular optical system, and is usually a value of 1~2.

Accordingly, to record a large quantity of information in the disc, it is necessary to reduce the size S of the laser beam spot. To reduce the size S of the laser beam spot, it is required to reduce the wavelength $\lambda$ of the used laser beam or to increase the numeral aperture (NA), as represented in the [formula 1].

That is to say, to increase the capacity of the disc, it is required to use a beam source having shorter wavelength and an objective lens having higher numeral aperture (NA). For instance, in case of the CD, a near infrared beam of 780nm wavelength and an objective lens having a numeral aperture (NA) of about 0.45 are used. Further, in case of the DVD having a recording capacity about 6~8 times as large, as compared to the CD, a red light beam having a wavelength of 650nm (or 630nm) and an objective lens having a numeral aperture (NA) of about 0.6 (0.65 in case of the DVD rewritable) are used. Also, in case of the BD, a narrow waveband (405 to 408nm) of light beam, that is, a blue light, as a beam source, and an objective lens having a numeral aperture (NA) of about 0.85 are used.

In an optical pickup apparatus, which is an apparatus to emit the laser beam in a signal recording layer of such a disc thus to record information or to receive the laser beam reflected from the signal recording layer of the disc thus to reproduce the information recoded in the disc, the quality of signals reproduced when recording and reproducing the information in and from the disc is depended on a shape of the laser beam spot on the disc, and the smaller and more circular the shape of the laser beam spot is, the better the quality of the reproduced signals is.

Increasing the capacity of the disc requires using the beam source having the shorter wavelength and the objective lens having the higher numeral aperture (NA). However, there is a limit in reducing the wavelength and increasing the numeral aperture.

Further, to represent a high density of three dimensional shape even in a 3D image apparatus or a hologram apparatus using a laser, it is necessary to reduce the size of the laser beam spot. Also, to increase the definition of calligraphic styles printed with a printer using the laser, it is necessary to reduce the size of the laser beam spot.

The present general inventive concept provides an apparatus, which converts a polarization of a laser beam incident onto a lens into an ellipse polarization by using a wave plate.

Further, the present general inventive concept provides an optical beam forming apparatus capable of forming a beam spot reduced in size on a disc by adjusting an angle of a wave plate.

Additional aspects and utilities of the present general inventive concept will be set forth in part in the description which follows and, in part, will be obvious from the description, or may be learned by practice of the present general inventive concept.

Features and/or utilities of the present general inventive concept may be realized by an optical beam forming apparatus including a beam source to emit a semiconductor laser beam, a wave plate to receive the beam emitted from the beam source and to form an elliptic polarization, and a lens to focus the beam passed through the wave plate to form a beam spot on a disc.

The semiconductor laser beam may include a plurality of laser beams having different wavelengths.

The wave plate may include a wave plate to allow a wavelength of at least one of the beams emitted from the beam source to have a phase difference of 1/4 or 1/2 wavelength therein.

The semiconductor laser beam may include laser beams having more than two wavelengths different from each other.

The disc may include at least one of a CD, a DVD, a BD, and a CBHD.

The wave plate may include a 1/2 wave plate or a 1/4 wave plate.

The 1/4 wave plate is disposed between an angle of 45 degrees and an angle of [45 + 0.05/ (0.6NA^2-0.248NA+0.0873) x 90] degrees, or between an angle of [45 - 0.05/ (0.6NA^2-0.248NA+0.0873) x 90] degrees and an angle of 45 degrees. Here, the NA may be a numeral aperture.

The wave plate may be disposed in an angle larger than 45 degrees and smaller than 90 degrees to a facing surface of the beam source.

The apparatus may further include a reflection mirror to reflect the beam passed through the wave plate toward the lens.

The reflection mirror may be located between the lens and the wave plate.

The wave plate and the reflection mirror may be integrated with or to each other.

The wave plate may form the elliptic polarization to a relatively longer wavelength and form a circular polarization to a relatively shorter wavelength.

The wave plate may form a circular polarization to a relatively longer wavelength and form the elliptic polarization to a relatively shorter wavelength

The relatively longer wavelength may include a CD or DVD wavelength, and the relatively shorter wavelength may include a BD or CBHD wavelength.

The wave plate may generate a phase difference smaller than a 1/4 wavelength, or larger than the 1/4 wavelength and smaller than a 1/2 wavelength at a wavelength of at least one of the beams emitted from the beam source.

The wave plate may convert the polarization of the beam source from a linear polarization to the elliptic polarization.

Features and/or utilities of the present general inventive concept may also be realized by an optical beam forming apparatus including beam sources to emit beams with three wavelengths different from one another, a three wave plate to convert a linear polarization into an elliptic polarization in at least one of the three wavelengths different from one another, and a lens to focus the beams passed through the three wave plate to form a beam spot on a disc.

The three wave plate may include a 1/4 wave plate to allow a wavelength of at least one of the beams passed through the lens to have a phase difference of 1/4 wavelength.

According to various embodiments of the present general inventive concept, the optical beam forming apparatus can change a polarization state in an ellipse form by adjusting the angle of the wave plate.

Further, according to the optical beam forming apparatus, a beam spot reduced in size can be formed on the disc by adjusting the angle of the wave plate.

Accordingly, it is possible to treat the disc in a high density.

BRIEF DESCRIPTION OF THE DRAWINGS

The above and/or other aspects of the present general inventive concept will become more apparent by describing certain exemplary embodiments of the present general inventive concept with reference to the accompanying drawings, in which:

FIG. 1 is a schematic configuration view of an optical pickup apparatus according to an exemplary embodiment of the present general inventive concept;

FIG. 2 is a schematic configuration view of an optical pickup apparatus according to another exemplary embodiment of the present general inventive concept;

FIG. 3 is a schematic configuration view of an optical pickup apparatus according to other exemplary embodiment of the present general inventive concept;

FIG. 4 is a view showing a beam focusing state of a polarization in case that a beam incident onto an objective lens with low numeral aperture (NA) is vibrated in a direction of x;

FIG. 5 is a view showing a beam focusing state of a polarization in case that a beam incident onto an objective lens with high numeral aperture (NA) is vibrated in a direction of x;

FIG. 6 is a view showing a beam focusing state of a polarization where the beam incident onto the objective lens with low numeral aperture (NA) is vibrated in a direction of z;

FIG. 7 is a view showing a beam focusing state of a polarization where the beam incident into the objective lens with high numeral aperture (NA) is vibrated in a direction of z;

FIG. 8 is a comparison graph on beam spot sizes between a circular polarization and an ellipse polarization;

DETAILED DESCRIPTION OF THE EMBODIMENTS

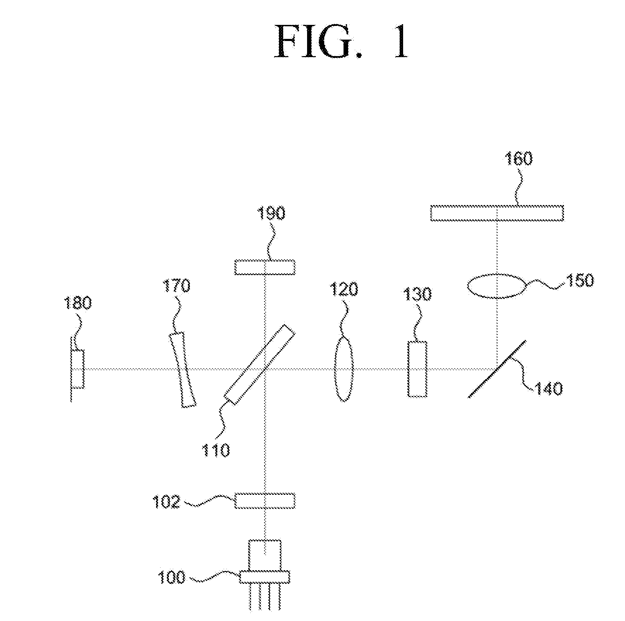

Exemplary embodiments of the present general inventive concept are described in greater detail below with reference to the accompanying drawings. In the following description, an optical beam forming apparatus is disclosed. The optical beam forming apparatus may be applied to fields, such as an optical pickup apparatus, a three dimensional (3D) apparatus, a hologram apparatus, an image storing apparatus, a printer, etc. As an example of the optical beam forming apparatus, the optical pickup apparatus is mainly described below, but the field to which the optical beam forming apparatus is applied is not limited thereto. That is, the optical beam forming apparatus may be applied to all of fields to which "a principle to focus a light or laser (hereinafter, referred as 'laser') beam and to form a laser beam spot on a disc" is applied. FIG. 1 shows a configuration of the optical beam forming apparatus (the optical pickup apparatus). Like reference numerals refer to like elements throughout.

Referring to FIG. 1, the optical pickup apparatus includes a beam source 100, a wave plate 130, and a lens 150. Further, the optical pickup apparatus may be configured to further include a grating 102, a beam splitter 110, a feedback beam detector 190, a collimating lens 120, a reflection mirror 140, an anastigmat 170 and a beam detector 180.

The beam source 100 may be a semiconductor beam source that emits a semiconductor laser beam.

The beam source 100 may emit laser beams of three different wavelengths corresponding to three cases where optical discs 160 are a CD, a DVD, and a BD/CBHD, respectively. That is, the beam source 100 may emit a blue light beam having a wavelength range in the vicinity of 400nm (a wavelength less than the approximately 540nms) suitable for the BD/CBHD having a relatively higher recording density, a red light beam having a wavelength range in the vicinity of 600nm (a wavelength of approximately 600~660nm) suitable for the DVD having a recording density lower than that of the BD/CBHD, and an infrared light beam having a wavelength range in the vicinity of 700nm (a wavelength of approximately 700 ~ 800nm) suitable for the CD having a recording density lower than that of the DVD. That is to say, the semiconductor laser beam may include a plurality of laser beams having wavelengths different from each other.

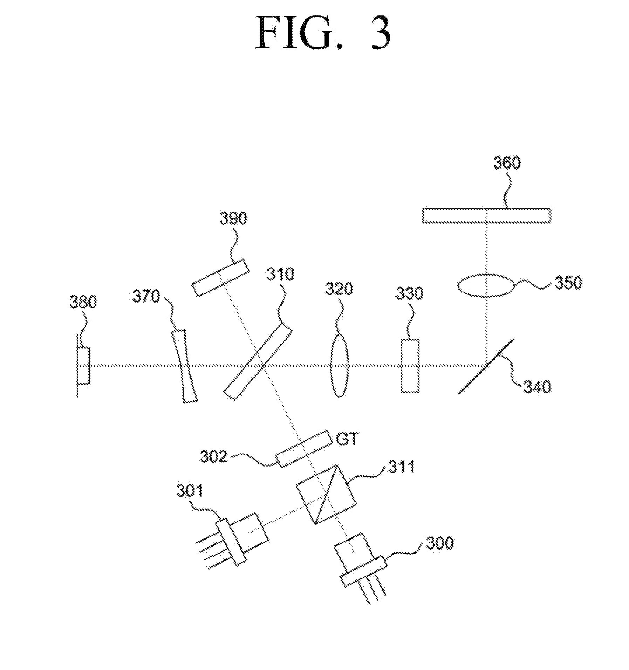

In FIG. 1, there is illustrated selectively emitting laser beams of all wavelengths in case of three cases with a single beam source 100, but as illustrated in FIG. 3, a plurality of beam sources 300 and 301 may be separately installed, or in other words, the beam sources 300 and 301 may be separate physical elements rather than the unitary physical component 100 illustrated in FIG. 1.

Referring to FIG. 1, the wave plate 130 receives the laser beams emitted from the beam source and forms an ellipse polarization.

The wave plate 130 acts to polarize the laser beam passed through the collimating lens 120. The wave plate 130 may include a 1/2 (half) wave plate or a 1/4 (quarter) wave plate. That is, the wave plate 130 may be disposed between the collimating lens 120 and the objective lens 150 to change a polarization component of the laser beams incident onto the objective lens 150. Here, the wave plate 130 may form different polarizations according to the wavelengths of the incident laser beams. For instance, the wave plate 130 may form an ellipse polarization to a relatively longer wavelength and form a circular polarization to a relatively shorter wavelength. Further, the wave plate 130 may form the circular polarization to the relatively longer wavelength and form the ellipse polarization to the relatively shorter wavelength.

The 1/2 wave plate is an optical part, which rotates the polarization of the laser beam passing therethrough in an angle of 90 degrees. In this case, the 1/2 wave plate rotates polarization components of the beams incident onto the objective lens 150 in an angle of approximately 30 degrees (or 60 degrees), so that a laser beam spot formed on the disc 160 forms the ellipse polarization, not the circular polarization. Here, an ellipticity of the ellipse polarization may be configured, so that a ratio of spot diameter (full width of half maximum, or FWHM) approaches or becomes 1.

The 1/4 wave plate, as a wave plate selected so that a thickness of the plate to the incident wave comes to a 1/4 wavelength, is an optical part, which may convert a linear polarization into the circular polarization and on the contrary, the circular polarization into the linear polarization, by using a double refraction.

Here, the lens 150 focuses the laser beams passed through the wave plate, and forms the laser beam spot on the disc.

The objective lens 150 may be formed of a three wave objective lens to satisfy the CD/DVD/BD. That is, to reduce the number of parts of the optical pickup apparatus and slim down the optical pickup apparatus, a three wave objective lens compatible with all wavelengths in case of three cases of the CD/DVD/BD may be used.

The disc 160 may be various kinds of optical discs having different recording densities and different using wavelengths, such as the CD/DVD/BD.

Data of the CD disc may be located 1.2mm from a surface thereof. Data of the DVD and BD discs are located 0.6mm and 0.1 mm from surfaces thereof, respectively. In the disc, the thicker the thickness is or the larger the thickness error is, the bigger an aberration may be. The bigger the aberration is, the more the distortion of beam size occurs. If the distortion occurs, a phenomenon arises in that the beam size gets bigger.

In case of the CD disc, since the beam size is relatively larger as compared to those of the DVD/BD and a data area is also large, it is insensitive to a small change in beam size. However, In case of the DVD/BD, since the beam size is smaller than that of the CD and the data area is also small, it is sensitive to a small change in beam size. Accordingly, in case of the DVD/BD, a control of the beam size is more important as compared with the CD.

In case of the BD, however, since the thickness of the disc is relatively thin as compared to that of the DVD/BD, the chance of generating the aberration is relatively low. Thus, the control of the beam size by using the wave plate may be performed by small degrees or may not be performed with the BD.

The beam detector 180 may be a Photo diode IC (PD), which receives the laser beams reflected and returned from a surface (a signal recording layer) of the disc 160 and detects an information signal and/or an error signal.

The beam splitter 110 guides the laser beams emitted from the beam source 100 toward the objective lens 150 and the laser beams reflected from the disc 160 toward the beam detector 180.

The grating 102 divides a laser beam emitted from the beam source 100 into three beams. The grating 102 is a diffraction element, which divides the laser beam emitted from the beam source 100 into a 0th-order laser beam (a main laser beam) and ±1th-order laser beams (sub laser beams) to detect a tracking error signal by a three beam method, a DPP method or the like. The grating 102 may obtain a reproducing signal from a detecting signal of the 0th-order laser beam reflected from the optical disc 160 and obtain the tracking error signal by computing the 0th-order laser beam and the ±1th-order laser beams reflected from the optical disc 160.

The beam splitter 110 changes a progressing path of the laser beams, toward the collimating lens 120. The diverged laser beams passed through the beam splitter 110 are converted into parallel laser beams by the collimating lens 120. The laser beams penetrated through the collimating lens 120 change their progressing path toward the objective lens 150 by means of the mirror 140.

The anastigmat 170 generates astigmatism to detect a focus error signal with an astigmatic method.

The collimating lens 120 may have at least one lens surface formed of an aspheric surface. Further, to correct aberrations generated by thickness differences of respective CD/DVD/BDs, thickness errors of respective discs, lasing wavelength deviations of laser diodes and wavelength changes according to the temperature, etc., the collimating lens 120 or other lens (not shown) may be moved in a direction of an optical axis.

The feedback beam detector (or feedback photo diode) 190 may control output values of the laser beams emitted from the beam source 100.

The reflection mirror 140 performs a role to reflect the beams passed through the wave plate 130 to direct them toward the objective lens 150 thus to change paths thereof.

The optical pickup apparatus according to the above-described exemplary embodiment of the present general inventive concept may use the beam source of three wavelengths and the 1/4 wave plate compatible with three wavelengths, corresponding to the three wave objective lens. Further, to change the polarization component of the beams into the ellipse polarization, not the circular polarization, the 1/4 wave plate may be disposed in an angle larger than 45 degrees and smaller than 90 degrees to the optical axis of the beams emitted from the beam source.

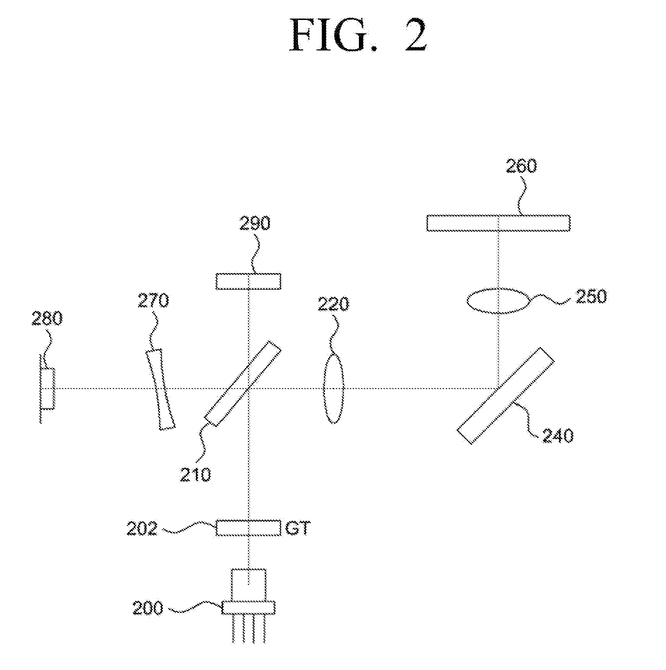

FIG. 2 is a schematic optical configuration view of an optical pickup apparatus according to another exemplary embodiment of the present general inventive concept. The configuration in FIG. 2 is a configuration in which the wave plate 130 and the reflection mirror 140 in FIG. 1 are integrated with each other. Referring to FIG. 2, the optical pickup apparatus includes a beam source 200, a wave plate and reflection mirror 240, and a lens 250. Further, the optical pickup apparatus may be configured to further include a grating 202, a beam splitter 210, a feedback beam detector 290, a collimating lens 220, an anastigmat 270 and a beam detector 280.

FIG. 3 is a schematic optical configuration view of an optical pickup apparatus according to other exemplary embodiment of the present general inventive concept. The configuration in FIG. 3 is a configuration in which two beam sources (a beam source 301 in which a CD wave laser and a DVD wave laser are integrated with or to each other and a BD wave beam source 300) are separately installed and a beam splitter 311 is added to the configuration in FIG. 1.

Referring to FIG. 3, the optical pickup apparatus includes a BD beam source 300, a DVD/CD beam source 301, a wave plate 330, and a lens 350. Further, the optical pickup apparatus may be configured to further include a grating 302, a beam splitter 310, a feedback beam detector 390, a collimating lens 320, a reflection mirror 340, an anastigmat 370 and a beam detector 380.

Hereinafter, an operation of the optical pickup apparatus constructed as described above will be explained.

First, a laser beam produced at and emitted from the beam source 100 is diffracted at the grating 102 and are divided into a 0th-order laser beam (main laser beam) and ±1 st-order laser beams (sub laser beams) to form three laser beams thus to be able to detect a tracking error. The laser beams passed through the grating 102 are changed into parallel beams while passing through collimating lens 120 via the beam splitter 110, and are reflected by the reflection mirror 140 toward the objective lens 150. The parallel laser beams are changed into circularly polarized laser beams while passing through the 1/4 wave plate 130 located in the front of the objective lens 150, and this circularly polarized laser beams form a laser beam spot on the signal recording layer of the disc 160 while passing through the objective lens 150.

By rotating an angle of optical axis of the 1/2 wave plate installed between the beam splitter 110 and the collimating lens 120 by 30°, a polarized state of the laser beams incident into the collimating lens 120 via the beam splitter 110 may be changed into an ellipse form. Accordingly, the laser beam spot formed on the disc 160 may have an ellipse polarization, not a circular polarization. In this case, an ellipticity of the ellipse polarization may be configured, so that a ratio of spot diameter (FWHM) approaches or becomes 1.

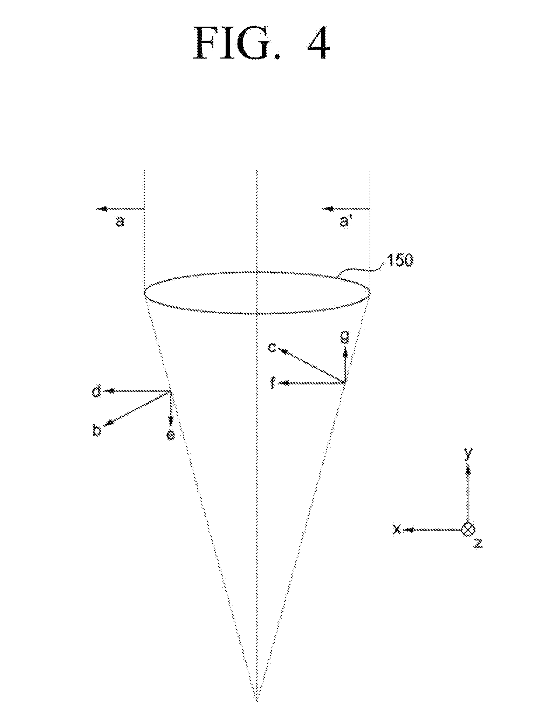

An effect of a linear polarization on the spot will be explained with reference to FIGS. 4 to 7.

FIGS. 4 to 7 show polarization states of the laser beam in the vicinity of an outermost portion of the objective lens 150 according to numeral apertures of the objective lens 150.

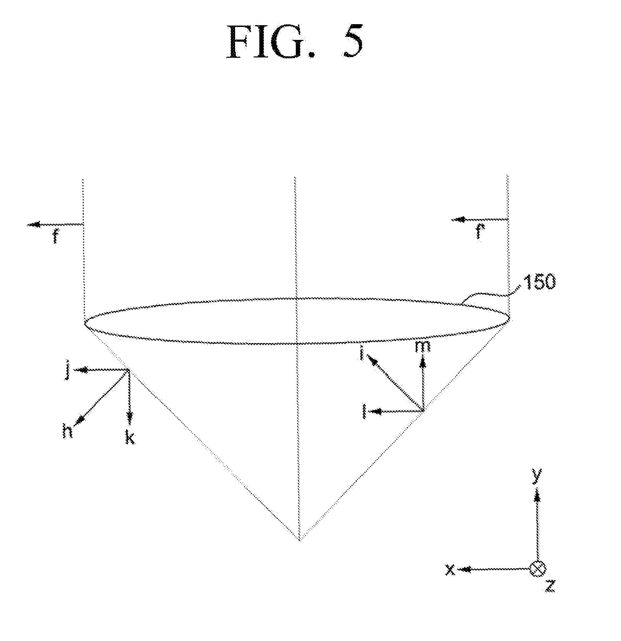

FIG. 4 shows a beam focusing state of a polarization when the laser beam incident into an objective lens 150 with low numeral aperture (low NA) is vibrated in a direction x, and FIG. 5 illustrates a beam focusing state of a polarization when the laser beam incident into an objective lens 150 with high numeral aperture (high low NA) is vibrated in the direction x.

In FIGS. 4 and 5, the polarizations of the laser beam incident onto the objective lenses 150 with the low and high NAs are designated as vectors a, a'(a=a') and f, f'(f=f'), respectively. The vectors a, a' and f, f' of the laser beam, which comes to a converged or focused laser beam after passing through the objective lens 150, are changed to b, c and h, i, respectively.

Here, if the vectors b, c and h, i are disassembled in directions of x and y in FIGS. 4 and 5, they are represented as follows:

$$b = d + e, c = f + g, h = j + k, i = l + m.$$

As can be seen from FIGS. 4 and 5, since components e, g and k, m in a direction of y extend in directions opposite to each other and have the same magnitude, they offset each other when the spot is formed. Because the higher the NA is, the bigger the components in the direction of y are, the offset components in the objective lens with higher NA get larger as compared to those in the objective lens with lower NA. That is, the effect on the spot gets bigger.

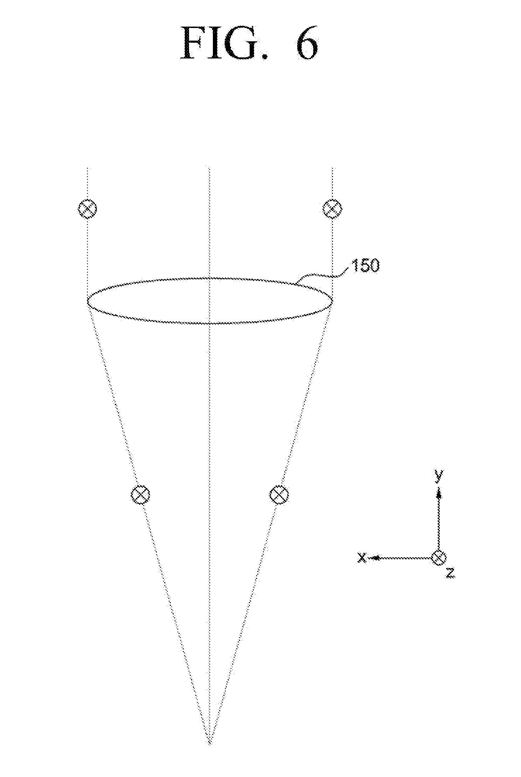

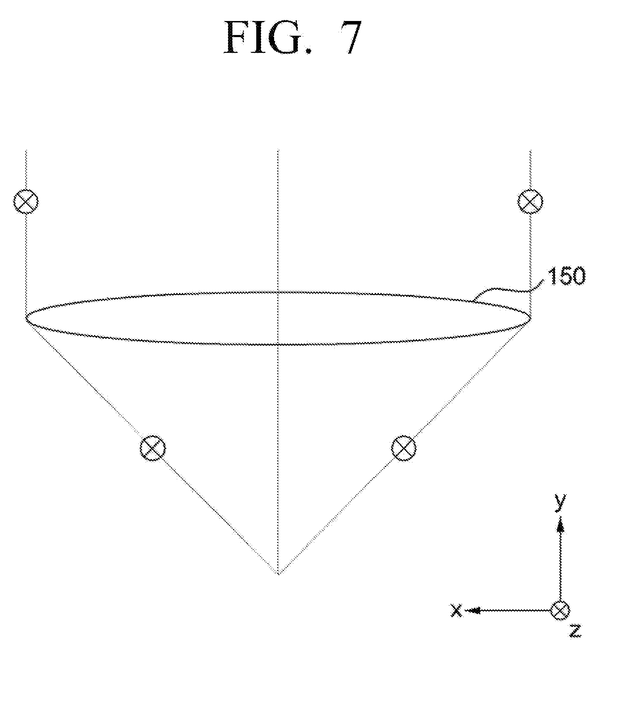

FIG. 6 shows a beam focusing state of a polarization where the laser beam incident into the objective lens 150 with low numeral aperture (low NA) is vibrated in a direction z, and FIG. 7 a beam focusing state of a polarization where the laser beam incident into the objective lens 150 with high numeral aperture (high low NA) is vibrated in the direction z.

As can be seen from FIGS. 6 and 7, the polarizations where the laser beam is vibrated in the direction z are not affected before and after the laser beam passes through the objective lens 150.

In case of focusing the linearly polarized laser beams through the objective lenses of FIGS. 4 to 7, the laser beam in the vibration direction of its polarization generates the components, which weaken each other and which increase as the NA of the objective lens 150 increases. On the other hand, the laser beam in the direction perpendicular to the vibration direction does not generate the components which weaken each other. Accordingly, when a linearly polarized beam is formed in the shape of an ellipse on an objective lens 150 having a high NA, the elasticity of the ellipse, or the deviation from a circular shape, is larger.

In other words, when the objective lens 150 focuses the linearly polarized laser beam, the laser beam of polarization direction in which the vibration direction of the polarization thereof is perpendicular to a tangent of the objective lens 150, is weakened or attenuated, whereas the laser beam of polarization direction in which the vibration direction of the polarization thereof is parallel to the tangent of the objective lens 150 is not attenuated.

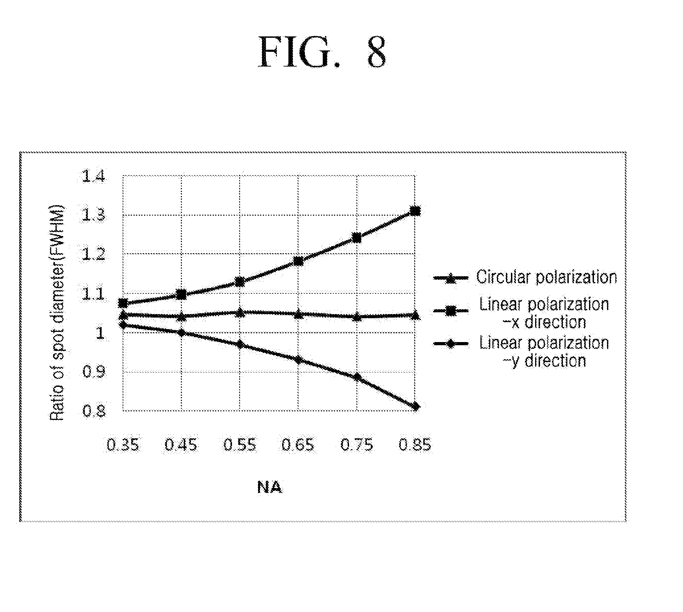

Next, a ratio of spot diameter (FWHM) in case that an intensity distribution of the incident laser beams is affected by a radiation angle characteristic of the beam source 100 will be explained with reference to FIG. 8.

FIG. 8 is a view illustrating the ratio of spot diameter (FWHM) in case that the intensity distribution of the incident laser beams is affected by a radiation angle characteristic of the semiconductor laser.

In an example of FIG. 8, when a circularly polarized laser beam passes through an objective lens, an elliptical shape of the spot on the optical disc is not changed, regardless of the NA of the optical disc. An effect of a FFP (far-field pattern) of the beam source 100 is corrected by making a polarization of the laser beam incident onto the objective lens 150 into the ellipse polarization.

The degree of the ellipse is caused by a difference between the directions parallel to and perpendicular to the tangent of the objective lens 150. In the example of FIG. 8, the spot is almost circular in shape because a focal distance of the collimating lens 120, as 20mm, is long.

The reason why the collimating lens 120 is selected as having the focal distance of 20mm is that in the optical memory, 20mm is near the focal distance which is reputed to have a good signal to noise (S/N) in view of a relation between an efficiency for laser beam utilization and a laser beam emitting output of the semiconductor laser.

In FIG. 8, it can be appreciated that as the NA gets larger, a difference between spot diameters (FWHM) in the linearly polarized laser beams (x direction, y direction) gradually gets larger, thereby increasing the degree of the ellipse or the deviation of the ellipse from a circular shape. Here, a major axis or a length axis direction in the ellipse of the beam source coincides with a vibration direction of the incident linearly polarized laser beam and is a direction parallel to a laser facing surface. The facing surface of the beam source is perpendicular with a progressing direction or propagation direction of the laser beam.

In case of the circular polarization as in data shown in FIG. 8, the laser beam passed through the objective lens forms a laser beam in the form of an ellipse with only a little asymmetry, so that the shape resembles a circle but is not a perfect circle. That is, in the ellipticity, a phenomenon occurs in that the ratio of spot diameter (FWHM) exceeds 1. What the ellipticity exceeding 1 represents is that the laser beam gets larger in size. The reason why the phenomenon as described above occurs is that an emitting laser beam of the semiconductor laser is formed of an elliptical beam. Accordingly, it can be appreciated that if the polarization of the laser beam incident onto the objective lens is configured in an elliptical polarization, the ellipticity approaches 1. According to this, it can be appreciated that in the elliptical polarization, the laser beam gets smaller in size, as compared to that of the circular polarization.

As can be seen from above, the ratio of spot diameter (FWHM) is deviated by 0.05 up from 1 due to the affect of the FFP of the semiconductor laser. This effect of the FFP of the semiconductor laser is corrected by making the polarization of the laser beam incident onto the high NA objective lens 150 in the ellipse polarization.

That is to say, when the circularly polarized laser beam is transmitted through the objective lens, the ratio of spot diameter (FWHM) may be 1.05 upon entry into the objective lens, but it becomes close by 1 when laser beam is an elliptically-polarized beam.

It can be appreciated that if finding a quadric function fitting for linear polarization (x direction) from FIG. 8, the ratio of spot diameter (FWHM) is $0.6NA^2-0.248NA+1.0873$.

A rotating angle of the 1/4 wave plate corresponding the ratio of spot diameter (FWHM) of 1.05 comes to $0.05/(0.6NA^2-0.248NA+1.0873 -1) \times 90° = 0.05/(0.6NA^2-0.248NA+1.0873 -1) \times 9°$.

Because, an optical axis of the 1/4 wave plate is inclined in angle of 45° to the laser facing surface, a setting angle of the optical axis of the 1/4 wave plate is the same as the following [formula 2].

$$45 + 0.05/(0.6NA^2-0.248NA+1.0873) \times 90° \quad …… \quad [\text{Formula 2}]$$

If finding a quadric function fitting for linear polarization (y direction) from FIG. 8, it is the same as the following [formula 3].

$$45 - 0.05/(0.6NA^2-0.248NA+1.0873) \times 90° \quad …… \quad [\text{Formula 3}]$$

Accordingly, if the wave plate is rotated between 45° and $45 + 0.05/(0.6NA^2-0.248NA+1.0873) \times 90°$ or between $45 - 0.05/(0.6NA^2-0.248NA+1.0873) \times 90°$ and 45°, the affect of the FFP of the beam source 100 (the semiconductor laser) can be corrected.

As described above, by taking the ratio of spot diameter (FWHM) forming a central value for design close to 1.0, even though the disc 160 or the objective lens 150 has a double refraction to configure the elliptical polarization instead of the circular polarization, a change in the ratio of spot diameter (FWHM) can be reduced about 5%.

For instance, in case of the BD, because the NA is 0.85, the wave plate needs to be rotated by 45° (the optical axis is set as 45+14.5=59.9°) from the above [formula 2]. This coincides with a value experimented and obtained when the disc 160 with double refraction is reproduced.

Further, the radiation angles of the semiconductor lasers have manufacturing deviations, which may differ slightly from each other. Accordingly, the radiation angle is set as the angle represented by the above [formula 2].

The optical pickup apparatus may be used in an apparatus for manufacturing an original disc for the disc 160, or an exposure apparatus for semiconductor. In these apparatuses, at present, a semiconductor laser is not used as the beam source. However, if the semiconductor laser is developed soon to be able to generate a narrow waveband of laser beam or a large output of power, it will be also used as the beam source 100.

On the other hand, in the optical pickup apparatus according to an embodiment of the present general inventive concept, the laser beam spot may form the ellipse polarization, not the circular polarization, on the disc by rotating the angle of optical axis of the 1/2 wave plate installed by 30°.

Further, the present general inventive concept is not limited thereto, and can achieve the same object and effect by properly setting an angle of a linear polarization of the semiconductor laser diode 100 and an angle of optical axis of the 1/4 wave plate, an angle of optical axis of the 1/2 wave plate or the 1/4 wave plate, the angle of the linear polarization of the semiconductor laser diode 100 , a specification of ellipticity of the 1/4 wave plate itself, an angle difference of phase shifts, or the like.

Although the present general inventive concept has been explained by the exemplary embodiments and drawings as described above, it is not limited to the foregoing exemplary embodiments. The present teaching can be readily applied to other types of apparatuses and many alternatives, modifications, and variations will be apparent to those skilled in the art.

Thus, the scope of the present general inventive concept is not to be construed as being limited to the description of the exemplary embodiments, and is to be construed by the attached claims and equivalents.

Although a few embodiments of the present general inventive concept have been shown and described, it would be appreciated by those skilled in the art that changes may be made in these embodiments without departing from the principles and spirit of the general inventive concept, the scope of which is defined in the claims and their equivalents.

## Claims

1.  An optical beam forming apparatus, comprising:

    a beam source (100, 200, 300) adapted to emit a semiconductor laser beam;
    a wave plate (130, 240, 330) adapted to receive the beam emitted from the beam source and to form an elliptic polarization; and
    a lens (150, 250, 350) adapted to focus the beam passed through the wave plate to form a beam spot on a disc.

2.  The apparatus of claim 1, wherein the semiconductor laser beam comprises a plurality of laser beams having different wavelengths.

3.  The apparatus of claim 1 or 2, wherein the wave plate comprises a wave plate to allow a wavelength of at least one of the beams emitted from the beam source to have a phase difference of 1/4 or 1/2 wavelength with respect to another of the beams emitted from the beam source.

4.  The apparatus of any one of claims 1 to 3, wherein the semiconductor laser beam comprises laser beams having more than two wavelengths different from each other.

5.  The apparatus of any one of claims 1 to 4, wherein the disc comprises at least one of a CD, a DVD, a BD, and a CBHD.

6.  The apparatus of any one of claims 1 to 5, wherein the wave plate comprises a 1/2 wave plate or a 1/4 wave plate.

7.  The apparatus of claim 6, wherein the 1/4 wave plate is disposed between an angle of 45 degrees and an angle of $[45 + 0.05/ (0.6NA^2-0.248NA+0.0873) \times 90]$ degrees, or between an angle of $[45 - 0.05/ (0.6NA^2-0.248NA+0.0873) \times 90]$ degrees and an angle of 45 degrees, where the NA is a numeral aperture of the lens.

8.  The apparatus of any one of claims 1 to 7, wherein the wave plate is disposed at an angle larger than 45 degrees and smaller than 90 degrees with respect to a facing surface of the beam source.

9.  The apparatus of any one of claims 1 to 8, further comprising:

    a reflection mirror (140, 240, 340) adapted to reflect the beam passed through the wave plate toward the lens.

10. The apparatus of claim 9, wherein the reflection mirror is located between the lens and the wave plate.

11. The apparatus of claim 9 or 10, wherein the wave plate and the reflection mirror are integrated with each other.

12. The apparatus of any one of claims 1 to 11, wherein the wave plate is adapted to form the elliptic polarization to a relatively longer wavelength and to form a circular polarization to a relatively shorter wavelength.

13. The apparatus of any one of claims 1 to 11, wherein the wave plate is adapted to form a circular polarization to a relatively longer wavelength and to form the elliptic polarization to a relatively shorter wavelength

14. The apparatus of claim 12 or 13, wherein the relatively longer wavelength comprises a CD or DVD wavelength, and the relatively shorter wavelength comprises a BD or CBHD wavelength.

15. The apparatus of any one of claims 1 to 14, wherein the wave plate is adapted to generate a phase difference smaller than a 1/4 wavelength, or larger than the 1/4 wavelength and smaller than a 1/2 wavelength at a wavelength of at least one of the beams emitted from the beam source.

# FIG. 1

# FIG. 2

# FIG. 3

# FIG. 4

# FIG. 5

# FIG. 6

# FIG. 7

150

# FIG. 8